# EUROPEAN PATENT APPLICATION

(11) **EP 4 674 660 A2**
(43) Date of publication of application: **07.01.2026**
(21) Application number: 25180665.9
(22) Date of filing: 04.06.2025
(51) Int. Cl.: B60K 15/03

(54) **TRANSPORT VEHICLE AND POWER SYSTEM FOR THE SAME**

(30) Priority: 04.07.2024 JP 2024108093
(71) Applicant: TOYOTA JIDOSHA KABUSHIKI KAISHA, Toyota-shi, Aichi 471-8571 (JP)
(72) Inventor: KOBAYASHI, Ryoya, Aichi, 4718571 (JP); SAKO, Shinnosuke, Aichi, 4718571 (JP); ENOKI, Tomohito, Aichi, 4718571 (JP)
(74) Representative: TBK

(57) **Abstract**

A transport vehicle (10, 110, 210) may include a tractor (12); a trailer (14) towed by the tractor (12); a hydrogen power device (34) configured to output power by consuming hydrogen; and a plurality of hydrogen tanks (40, 42) for supplying hydrogen to the hydrogen power device (34). The plurality of hydrogen tanks (40, 42) may include at least one first hydrogen tank (40) of fixed type that is fixable to the tractor (12) and at least one second hydrogen tank (42) of cartridge type that is detachably attachable to the trailer (14).

## Description

### CROSS REFERENCE TO RELATED APPLICATIONS

This application claims priority to Japanese Patent Application No. 2024-108093 filed on July 4, 2024. The entire content of the priority application is incorporated herein by reference.

### TECHNICAL FIELD

The technology disclosed herein relates to transport vehicles and power systems for transport vehicles.

### BACKGROUND ART

Japanese Patent Application Publication No. 2022-165246 describes a transport vehicle. This transport vehicle comprises a vehicle body, a hydrogen power device configured to output power by consuming hydrogen, and a plurality of hydrogen tanks for supplying hydrogen to the hydrogen power device. The plurality of hydrogen tanks is fixed to the vehicle body.

### SUMMARY

A large number of hydrogen tanks may be mounted in a transport vehicle for a long-distance transport. However, the larger number of hydrogen tanks requires a longer time to refill all the tanks with hydrogen. The transport vehicle cannot be used while the hydrogen tanks are being refilled with hydrogen. That is, simply increasing the number of hydrogen tanks mounted in the transport vehicle may lead to a decrease in the operating rate of the transport vehicle.

In view of the above, the disclosure herein provides a technology for reducing a hydrogen refill time for a transport vehicle.

The technology disclosed herein is embodied in a transport vehicle. In a first aspect, the transport vehicle may comprise a tractor, a trailer towed by the tractor, a hydrogen power device configured to output power by consuming hydrogen, and a plurality of hydrogen tanks for supplying hydrogen to the hydrogen power device. The plurality of hydrogen tanks may include at least one first hydrogen tank of fixed type that is fixable to the tractor and at least one second hydrogen tank of cartridge type that is detachably attachable to the trailer.

The transport vehicle above uses at least one first hydrogen tank of fixed type and at least one second hydrogen tank of cartridge type as hydrogen tanks. The at least one second hydrogen tank can be replaced with already-refilled hydrogen tank(s) when hydrogen remaining amount therein becomes small. This allows for a reduction in hydrogen refill time for the transport vehicle compared to directly refilling the at least one second hydrogen tank with hydrogen. Even when the hydrogen remaining amounts in the at least one first hydrogen tank and the at least one second hydrogen tank become small, necessary refill may be accomplished simply by replacement of the at least one second hydrogen tank with already-refilled hydrogen tank(s) (i.e., the at least one first hydrogen tank does not have to be replaced or refilled) if an expected transport distance is relatively short, allowing for a cutdown of hydrogen refill work for the transport vehicle. Further, the hydrogen tanks are distributed in both the tractor and the trailer. The at least one second hydrogen tank disposed in the trailer can be refilled with hydrogen before the trailer is coupled to the tractor. That is, replacement of the trailer achieves both exchange of cargos and hydrogen refill for the transport vehicle at once. Additionally, since the at least one first hydrogen tank is disposed in the tractor, the tractor can run by itself even when the trailer is not coupled thereto.

In a second aspect, the at least one first hydrogen tank may be configured to be refilled with hydrogen in a state of being fixed to the tractor, and the at least one second hydrogen tank may be configured to be refilled with hydrogen in a state of being detached from the trailer.

In a third aspect according to the first or second aspect, the trailer may comprise a cargo compartment structure. In this case, the at least one second hydrogen tank may be located forward of a cargo compartment defined by the cargo compartment structure.

In a fourth aspect according to the first or second aspect, the trailer may comprise a cargo compartment structure. In this case, the at least one second hydrogen tank may be located inside a cargo compartment defined by the cargo compartment structure.

In a fifth aspect according to any of the first to fourth aspects, the at least one second hydrogen tank may comprise a plurality of second hydrogen tanks detachably attachable to the trailer individually. This configuration allows the second hydrogen tanks to be replaced individually, allowing only second hydrogen tank(s) with small hydrogen remaining amount(s) to be replaced.

In a sixth aspect according to any of the first to fifth aspects, the transport vehicle may further comprise a tank unit that is detachably attachable to the trailer. In this case, the at least one second hydrogen tank may comprise a plurality of second hydrogen tanks placed within the tank unit. This configuration allows the tank unit to be replaced as a single unit, simplifying the replacement work. Further, the configuration allows the plurality of second hydrogen tanks to be replaced at once, also simplifying the replacement work.

In a seventh aspect according to the sixth aspect, the tank unit may comprise manifold connected to each of the plurality of second hydrogen tanks, a hydrogen supply port connected to the manifold and configured to be detachably attached to a hydrogen supply pathway disposed in the tractor or the trailer, and a hydrogen refill port connected to the manifold and configured to be detachably attached to an external hydrogen refill device. This configuration allows for a reduction in the length of the hydrogen supply pathway disposed in the tractor or the trailer by positioning the hydrogen supply port of the tank unit near the hydrogen power device.

In an eighth aspect according to any of the first to seventh aspects, the transport vehicle may further comprise a controller configured to control a hydrogen supply from the plurality of hydrogen tanks to the hydrogen power device. In this case, the controller may prioritize supplying hydrogen from the at least one second hydrogen tank to the hydrogen power device over supplying hydrogen from the at least one first hydrogen tank to the hydrogen power device. This configuration allows for a reduction in a hydrogen refill time for the at least one first hydrogen tank because the hydrogen in the at least one second hydrogen tank is consumed prior to the hydrogen in the at least one first hydrogen tank. Alternatively, when a large amount of hydrogen remains in the at least one first hydrogen tank, hydrogen refill for the at least one first hydrogen tank can be omitted and only one or more second hydrogen tanks can be replaced to complete the hydrogen refill for the transport vehicle.

In a nineth aspect according to any of the first to eighth aspects, the trailer may comprise a pair of side members extending along a front-rear direction of the transport vehicle. In this case, the at least one second hydrogen tank may be detachably attachable to at least one of the pair of side members. This configuration ensures a wide space where a cargo to be transported is placed (e.g., a cargo compartment) above the pair of side members in the trailer.

In a tenth aspect according to the nineth aspect, the at least one second hydrogen tank may comprise a plurality of second hydrogen tanks detachably attachable to at least one of the pair of side members individually. This configuration allows the second hydrogen tanks to be replaced individually, allowing only second hydrogen tank(s) with small hydrogen remaining amount(s) to be replaced.

The technology disclosed herein is also embodied in a power system for a transport vehicle. In an eleventh aspect, a power system for a transport vehicle may comprise a hydrogen power device configured to output power by consuming hydrogen, a plurality of hydrogen tanks connected to the hydrogen power device, and a controller configured to control a hydrogen supply from the plurality of hydrogen tanks to the hydrogen power device. The plurality of hydrogen tanks may include at least one first hydrogen tank of fixed type that is fixable to a vehicle body of the transport vehicle and at least one second hydrogen tank of cartridge type that is detachably attachable to the vehicle body. The controller may prioritize supplying hydrogen from the at least one second hydrogen tank to the hydrogen power device over supplying hydrogen from the at least one first hydrogen tank to the hydrogen power device.

The power system above also uses the at least one first hydrogen tank of fixed type and at least one second hydrogen tank of cartridge type as hydrogen tanks. This allows for a reduction in a hydrogen refill time for the transport vehicle and/or a cutdown in hydrogen refill work for the transport vehicle. Especially, a hydrogen refill time for the at least one first hydrogen tank can be reduced since the hydrogen in the at least one second hydrogen tank is consumed prior to the hydrogen in the at least one first hydrogen tank. When a large amount of hydrogen remains in the at least one first hydrogen tank, hydrogen refill for the at least one first hydrogen tank can be omitted and only one or more second hydrogen tanks are required to be replaced to complete hydrogen refill for the transport vehicle.

In a twelfth aspect according to the eleventh aspect, the at least one second hydrogen tank may comprise a plurality of second hydrogen tanks detachably attachable to the vehicle body individually. This configuration allows the second hydrogen tanks to be replaced individually, allowing only second hydrogen tank(s) with small hydrogen remaining amount(s) to be replaced.

In a thirteenth aspect according to the eleventh or twelfth aspect, each of the at least one second hydrogen tank may have a column shape. In this case, an axial direction of the column shape may be along a left-right direction or a front-rear direction of the transport vehicle. This configuration allows a relatively large number of hydrogen tanks to be disposed in a space for the at least one second hydrogen tank.

In a fourteenth aspect according to the twelfth or thirteenth aspect, the second hydrogen tanks may be arranged along an up-down direction. In this case, the controller may prioritize supplying hydrogen from a lower-positioned second hydrogen tank to the hydrogen power device over supplying hydrogen from an upper-positioned second hydrogen tank to the hydrogen power device. In this configuration, the hydrogen in lower-positioned second hydrogen tanks decreases earlier than the hydrogen in upper-positioned second hydrogen tanks. This improves replacement workability for the second hydrogen tanks.

The technology disclosed herein is also embodied in a transport vehicle. In a fifteenth aspect, a transport vehicle may comprise a vehicle body, a hydrogen power device disposed in the vehicle body and configured to output power by consuming hydrogen, and a plurality of hydrogen tanks disposed in the vehicle body, wherein the plurality of hydrogen tanks is for supplying hydrogen to the hydrogen power device. The vehicle body may comprise a cabin and a cargo bed located rearward of the cabin. The plurality of hydrogen tanks may include at least one first hydrogen tank of fixed type that is fixable to the vehicle body and at least one second hydrogen tank of cartridge type that is detachably attachable to the vehicle body. At least one opening may be formed between the cabin and the cargo bed, and the opening may be open in a width direction of the transport vehicle. The at least one second hydrogen tank may be configured to be attached to the vehicle body by being inserted to the at least one opening in the width direction. The cargo bed herein refers to a portion of the vehicle body on which a cargo to be transported is actually placed. The cargo bed may or may not be covered by a cargo chamber structure.

The transport vehicle above also uses the at least one first hydrogen tank of fixed type and at least one second hydrogen tank of cartridge type as hydrogen tanks. This allows for a reduction in a hydrogen refill time for the transport vehicle and/or a cutdown in hydrogen refill work for the transport vehicle. Further, the at least one second hydrogen tank is configured to be attached to the vehicle body by being inserted in the width direction of the transport vehicle into the at least one opening which is open in the width direction. This facilitates replacement of the at least one second hydrogen tank because the cabin and the like are less likely to get in the way during the replacement of the at least one second hydrogen tank. Additionally, since the at least one second hydrogen tank is located between the cabin and the cargo bed, changes in the weight balance of the transport vehicle depending on whether the at least one second hydrogen tank is mounted or not can be suppressed. Further, placing the at least one second hydrogen tank near the hydrogen power device reduces the length of a hydrogen supply pathway between the at least one second hydrogen tank and the hydrogen power device.

### BRIEF DESCRIPTION OF DRAWINGS

FIG. 1 schematically shows a configuration of a transport vehicle 10 according to a first embodiment.
FIG. 2 schematically shows the configuration of the transport vehicle 10.
FIG. 3 shows a state where a tank unit 60 is detached from a second vehicle body 24 of a trailer 14.
FIG. 4 shows a state where one second hydrogen tank 42 is detached from the second vehicle body 24 of the trailer 14.
FIG. 5 shows a state where two second hydrogen tanks 42 are detached from the second vehicle body 24 of the trailer 14.
FIG. 6 schematically shows a configuration of a transport vehicle 110 according to a second embodiment.
FIG. 7 schematically shows a configuration of a transport vehicle 210 according to a third embodiment.
FIG. 8 shows a bottom view of the transport vehicle 210, showing second hydrogen tanks 42 attached to side members 70.
FIG. 9 schematically shows a configuration of a transport vehicle 310 according to a fourth embodiment.
FIG. 10 schematically shows the configuration of the transport vehicle 310.
FIG. 11 schematically shows a configuration of a transport vehicle 410 according to a fifth embodiment.
FIG. 12 schematically shows a configuration of a transport vehicle 510 according to a sixth embodiment.
FIG. 13 schematically shows the configuration of the transport vehicle 510.

### DETAILED DESCRIPTION

Terms "forward", "rearward", and "longitudinal direction" simply used herein mean forward, rearward, and longitudinal direction with respect to the transport vehicle, respectively. Similarly, terms "leftward", "rightward", and "width direction" simply used herein mean leftward, rightward, and width direction with respect to the transport vehicle, respectively, and terms "upward", "downward", and "height direction" simply used herein mean upward, downward, and height direction with respect to the transport vehicle, respectively. The width direction of the transport vehicle coincides with a right-left direction of the transport vehicle and thus may also be termed a right-left direction. For example, when the transport vehicle is on a horizontal surface, the height direction of the transport vehicle coincides with the vertical direction, the width direction of the transport vehicle is the direction parallel to the horizontal surface and the axles of the transport vehicle, and the longitudinal direction of the transport vehicle is the direction parallel to the horizontal surface and perpendicular to the axles of the transport vehicle.

Representative, non-limiting examples of the present disclosure will now be described in further detail with reference to the attached drawings. This detailed description is merely intended to teach a person of skill in the art further details for practicing aspects of the present teachings and is not intended to limit the scope of the present disclosure. Furthermore, each of the additional features and teachings disclosed below may be utilized separately or in conjunction with other features and teachings to provide improved transport vehicles and power systems for the same.

Moreover, combinations of features and steps disclosed in the following detailed description may not be necessary to practice the present disclosure in the broadest sense, and are instead taught merely to particularly describe representative examples of the present disclosure. Furthermore, various features of the above-described and below-described representative examples, as well as the various independent and dependent claims, may be combined in ways that are not specifically and explicitly enumerated in order to provide additional useful embodiments of the present teachings.

All features disclosed in the description and/or the claims are intended to be disclosed separately and independently from each other for the purpose of original written disclosure, as well as for the purpose of restricting the claimed subject matter, independent of the compositions of the features in the embodiments and/or the claims. In addition, all value ranges or indications of groups of entities are intended to disclose every possible intermediate value or intermediate entity for the purpose of original written disclosure, as well as for the purpose of restricting the claimed subject matter.

(First Embodiment) Referring to the drawings, a transport vehicle 10 according to a first embodiment is described. The transport vehicle 10 according to this embodiment is mainly used for cargo transport. The transport vehicle 10 is not limited to a vehicle driven by a user but may be a vehicle remotely controlled by an external device or an autonomous vehicle.

Throughout the drawings, a direction FR indicates a forward direction of the longitudinal direction (or front-rear direction) of the transport vehicle 10 and a direction RR indicates a rearward direction of the longitudinal direction of the transport vehicle 10. Further, a direction LH indicates a leftward direction of the width direction (or right-left direction) of the transport vehicle 10 and a direction RH indicates a rightward direction of the width direction of the transport vehicle 10. Moreover, a direction UP indicates an upward direction of the height direction (or up-down direction) of the transport vehicle 10 and a direction DW indicates a downward direction of the height direction of the transport vehicle 10.

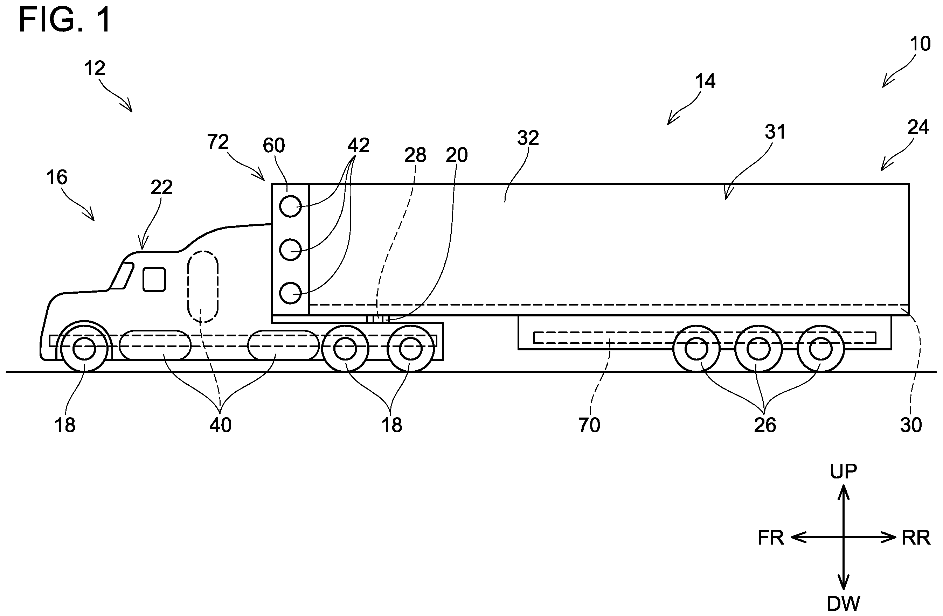

As shown in FIGS. 1 to 5, the transport vehicle 10 comprises tractor 12 and a trailer 14. The tractor 12 is positioned forward of the trailer 14 and tows the trailer 14. The tractor 12 comprises a first vehicle body 16 and a plurality of first wheels 18. The plurality of first wheels 18 is rotatably attached to the first vehicle body 16. The first vehicle body 16 comprises a coupling portion 20 and a cabin 22. The cabin 22 defines a space for a vehicle occupant. The trailer 14 comprises a second vehicle body 24 and a plurality of second wheels 26. The plurality of second wheels 26 is rotatably attached to the second vehicle body 24. The second vehicle body 24 comprises a coupling portion 28, a cargo bed 30, and a cargo compartment structure 32. The coupling portion 28 of the trailer 14 is configured to be detachably coupled to the coupling portion 20 of the tractor 12. The cargo bed 30 is located rearward of the cabin 22. The cargo compartment structure 32 covers the cargo bed 30 and defines a cargo compartment 31 above the cargo bed 30. The cargo bed 30 is a portion on which a cargo to be transported is actually placed. Thus, a cargo is housed in the cargo compartment 31. The first vehicle body 16 and the second vehicle body 24 are both constituted of a metal such as a steel material or an aluminum alloy, although this is merely an example.

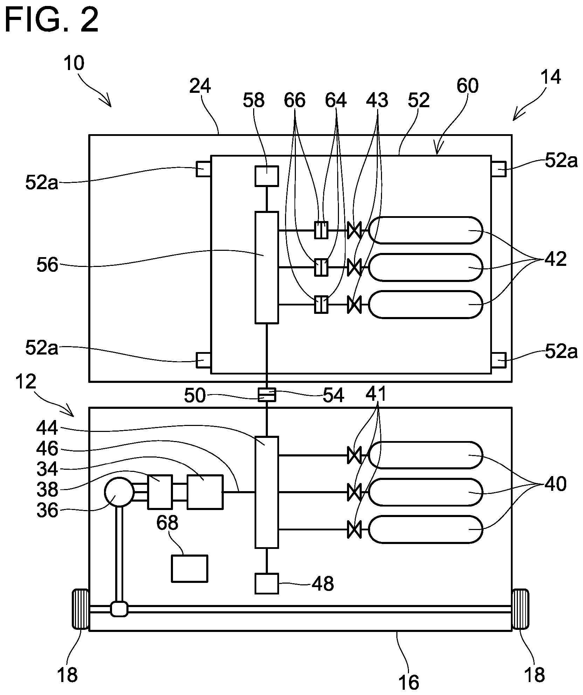

As shown in FIGS. 2 to 5, the transport vehicle 10 further comprises a hydrogen power device 34, a motor 36, and an inverter 38. The hydrogen power device 34, the motor 36, and the inverter 38 are all disposed in the first vehicle body 16. In this embodiment, the hydrogen power device 34 is a fuel cell stack and generates direct-current (DC) power from a reaction between a fuel gas (e.g., hydrogen) and an oxidation gas (e.g., air). The motor 36 is a traction motor that drives the first wheels18. The motor 36 is a three-phase motor generator with a U phase, V phase, and W phase, although this is merely an example. The inverter 38 is located between the hydrogen power device 34 and the motor 36. The inverter 38 converts the DC power from the hydrogen power device 34 to alternating-current (AC) power and supplies it to the motor 36. With the power, the motor 36 drives the first wheels 18. The motor 36 may be configured to drive at least one of the plurality of first wheels 18. Further, if the rated voltage of the hydrogen power device 34 is different from the rated voltage of the motor 36, a DC-DC converter may further be provided between the hydrogen power device 34 and the motor 36.

As shown in FIGS. 1 to 5, the transport vehicle 10 further comprises a plurality of hydrogen tanks 40, 42. Each of the plurality of hydrogen tanks 40, 42 is configured to store hydrogen therein. The hydrogen can be supplied to the hydrogen power device 34 from each of the hydrogen tanks 40, 42. Each the hydrogen tanks 40, 42 has a column shape. In this embodiment, each of the hydrogen tanks 40, 42 has a cylinder shape. However, in another embodiment, each of the hydrogen tanks 40, 42 may have a prismatic column shape.

The plurality of hydrogen tanks 40, 42 includes a plurality of first hydrogen tanks 40 and a plurality of second hydrogen tanks 42. The plurality of first hydrogen tanks 40 is of fixed type that is fixable to the first vehicle body 16 of the tractor 12. The plurality of second hydrogen tanks 42 is of cartridge type that is detachably attachable to the second vehicle body 24 of the trailer 14. Although details will be described later, the plurality of second hydrogen tanks 42 is disposed in a tank unit 60, and the tank unit 60 is configured to be detachably attachable to the second vehicle body 24 of the trailer 14. The tank unit 60 (i.e., the second hydrogen tanks 42 therein) is located between the cabin 22 and the cargo bed 30 in the front-rear direction of the transport vehicle 10. The axial direction of the column shape of each second hydrogen tank 42 is along the right-left direction of the transport vehicle 10. Further, the second hydrogen tanks 42 are arranged in the up-down direction.

As shown in FIGS. 2 to 5, the transport vehicle 10 further comprises a first manifold 44, a hydrogen supply pathway 46, a first hydrogen refill port 48, and a first connection port 50. The first manifold 44, the hydrogen supply pathway 46, the first hydrogen refill port 48, and the first connection port 50 are all disposed in the first vehicle body 16 of the tractor 12. The first manifold 44 is connected to each of the first hydrogen tanks 40 such that hydrogen can flow therebetween. The hydrogen supply pathway 46 is located between the first manifold 44 and the hydrogen power device 34. Thus, the hydrogen in the first hydrogen tanks 40 is supplied to the hydrogen power device 34 through the first manifold 44 and the hydrogen supply pathway 46. The first hydrogen refill port 48 is connected to each of the first hydrogen tanks 40 via the first manifold 44 such that hydrogen can flow therebetween. The first hydrogen refill port 48 is configured to be detachably attachable to an external hydrogen refill device (not shown). Hydrogen supplied from the external hydrogen refill device to the first hydrogen refill port 48 is supplied into each first hydrogen tank 40 through the first manifold 44. Thus, the first hydrogen tanks 40 are refilled with hydrogen. As apparent from the above, each first hydrogen tank 40 is configured to be refilled with hydrogen in a state of being fixed to the first vehicle body 16 of the tractor 12. The first connection port 50 is connected to the hydrogen supply pathway 46 via the first manifold 44 such that hydrogen can flow therebetween.

As shown in FIGS. 2 to 5, the transport vehicle 10 further comprises the tank unit 60. The tank unit 60 is located in an opening 72 in the transport vehicle 10. The opening 72 is formed between the cabin 22 and the cargo bed 30 in the front-rear direction of the transport vehicle 10. The opening 72 is open in the width direction of the transport vehicle 10 (in the directions LH and RH here). The plurality of second hydrogen tanks 42 described above is positioned in the tank unit 60. The tank unit 60 is configured to be detachably attachable to the second vehicle body 24 of the trailer 14. In this embodiment, the tank unit 60 can be attached to the second vehicle body 24 of the trailer 14 by being inserted into the opening 72 in the width direction of the transport vehicle 10. The second hydrogen tanks 42 attached in the second vehicle body 24 of the trailer 14 can be detached therefrom by being taken out in the width direction through the opening 72. Thus, the plurality of second hydrogen tanks 42 can be attached to and detached from the second vehicle body 24 of the trailer 14 at once. Although details will be described later, when the tank unit 60 is attached to the second vehicle body 24 of the trailer 14, the plurality of second hydrogen tanks 42 is connected to the hydrogen power device 34 disposed in the tractor 12. The tank unit 60 is also configured to allow the second hydrogen tanks 42 to be attached and detached individually. Thus, the second hydrogen tanks 42 can also be individually attached to and detached from the second vehicle body 24 of the trailer 14.

The configuration of the tank unit 60 is not particularly limited. In this embodiment, the tank unit 60 further comprises a unit frame 52, a second connection port 54, a second manifold 56, and a second hydrogen refill port 58, although this is merely an example. The unit frame 52 supports the plurality of second hydrogen tanks 42. The unit frame 52 is configured to be detachably attachable to the second vehicle body 24 of the trailer 14. The unit frame 52 comprises a plurality of locks 52a. The unit frame 52 is locked to and unlocked from the second vehicle body 24 of the trailer 14 by the plurality of locks 52a.

The second manifold 56 is supported by the unit frame 52. The second manifold 56 is connected to each of the plurality of second hydrogen tanks 42 such that hydrogen can flow therebetween. A pair of couplers 64, 66 is located between the second manifold 56 and each of the plurality of second hydrogen tanks 42. Each pair of couplers 64, 66 comprises a socket 64 connected to corresponding one of the second hydrogen tanks 42 and a plug 66 connected to the second manifold 56. The sockets 64 are detachably coupled with the plugs 66.

The second connection port 54 is supported by the unit frame 52. The second connection port 54 is connected to the second manifold 56 such that hydrogen can flow therebetween. That is, the second connection port 54 is connected to each of the plurality of second hydrogen tanks 42 via the second manifold 56 such that hydrogen can flow therebetween. Thus, the hydrogen can be supplied from each of the plurality of second hydrogen tanks 42 to the second connection port 54 through the second manifold 56. When the tank unit 60 is attached to the second vehicle 24 of the trailer 14, the second connection port 54 is connected to the first connection port 50 disposed in the tractor 12. As described above, the first connection port 50 is connected to the hydrogen supply pathway 46 via the first manifold 44 such that hydrogen can flow therebetween. Thus, when the tank unit 60 is attached to the second vehicle body 24 of the trailer 14, each of the plurality of second tank units 42 is connected to the hydrogen power device 34 disposed in the tractor 12 such that hydrogen can flow therebetween.

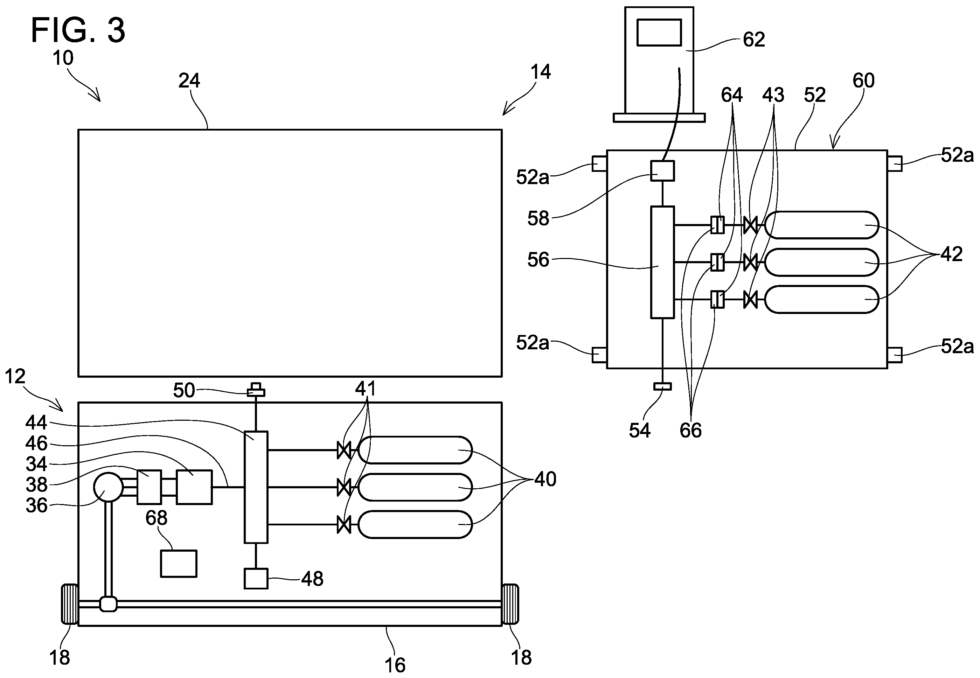

The second hydrogen refill port 58 is supported by the unit frame 52. The second hydrogen refill port 58 is connected to the second manifold 56 such that hydrogen can flow therebetween. That is, the second hydrogen refill port 58 is connected to each of the plurality of second hydrogen tanks 42 via the second manifold 56 such that hydrogen can flow therebetween. As shown in FIG. 3, the second hydrogen refill port 58 is configured to be detachably attachable to an external hydrogen refill device 62. Hydrogen supplied from the external hydrogen refill device 62 to the second hydrogen refill port 58 is supplied to each second hydrogen tank 42 through the second manifold 56. Thus, each second hydrogen tank 42 is refilled with hydrogen. The plurality of second hydrogen tanks 42 may be refilled with hydrogen while the tank unit 60 is detached from the second vehicle body 24 of the trailer 14. Alternatively, the plurality of second hydrogen tanks 42 may be refilled with hydrogen while the tank unit 60 is attached in the second vehicle body 24 of the trailer 14.

In this embodiment, the transport vehicle 10 can be refilled with hydrogen within a short time by preparing a plurality of tank units 60. Specifically, when the hydrogen remaining amount in the second hydrogen tanks 42 currently mounted in the transport vehicle 10 is small, the tank unit 60 currently mounted in the transport vehicle 10 can be replaced with another tank unit 60 including already-refilled second hydrogen tanks 42. The second hydrogen refill port 58 of the detached tank unit 60 is connected to the external hydrogen refill device 62 to refill each of the second hydrogen tanks 42 in the tank unit 60 detached from the transport vehicle 10. As above, the transport vehicle 10 according to this embodiment allows the entire tank unit 60 including the plurality of second hydrogen tanks 42 to be detached from the second vehicle body 24 of the transport vehicle 10. Then, the plurality of second hydrogen tanks 42 can be refilled with hydrogen in the state of being detached from the transport vehicle 10.

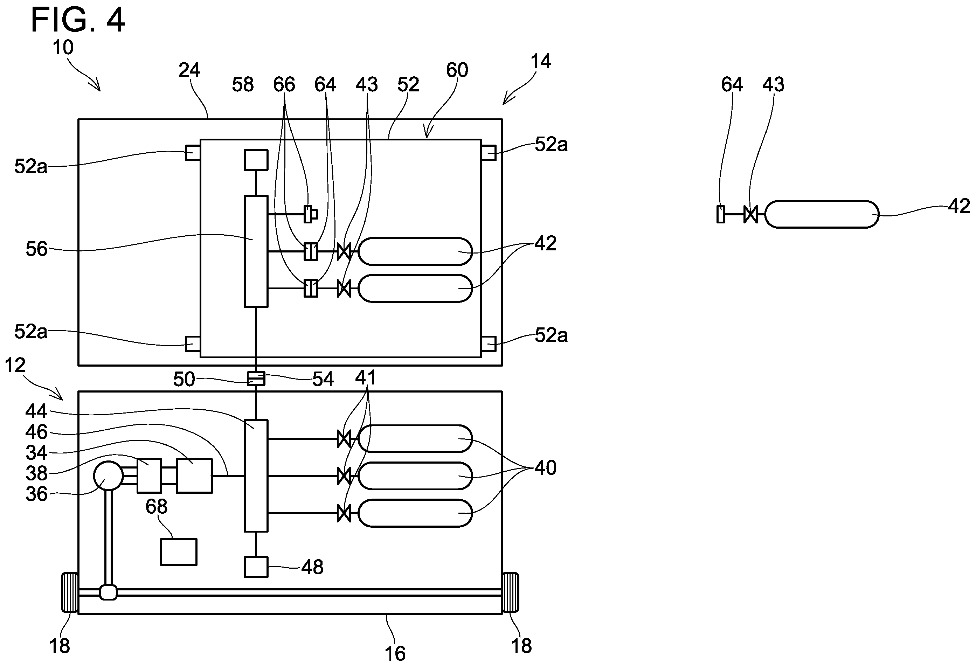

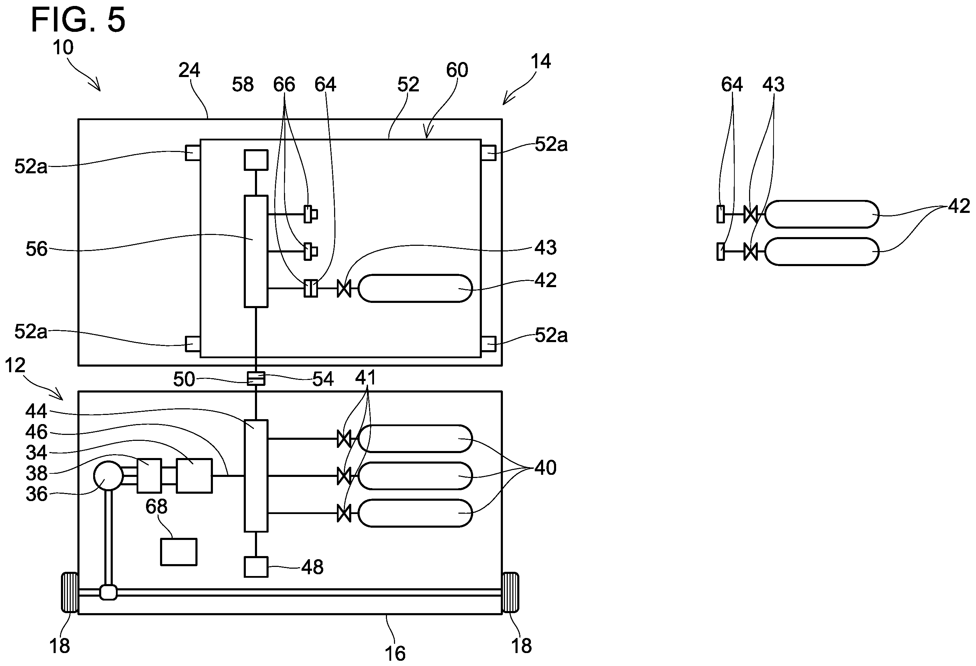

As described above, the tank unit 60 is configured to allow the second hydrogen tanks 42 to be attached and detached individually. Thus, as shown in FIGS. 4 and 5, the transport vehicle 10 according to this embodiment allows one or more second hydrogen tanks 42 to be detached individually from the second vehicle 24 of the transport vehicle 10. Then, the one or more second hydrogen tanks 42 can be refilled with hydrogen in the state of being detached from the transport vehicle 10.

As shown in FIGS. 2 to 5, the transport vehicle 10 further comprises a controller 68. The controller 68 is a computer device comprising a processor, a memory, etc. In this embodiment, the controller 68 is electrically connected to control valves 41 for the plurality of first hydrogen tanks 40 and control valves 43 for the plurality of second hydrogen tanks 42 to control these control valves 41, 43. Thus, the controller 68 can control a hydrogen supply from the hydrogen tanks 40, 42 to the hydrogen power device 34. The controller 68 can prioritize supplying hydrogen from the second hydrogen tanks 42 to the hydrogen power device 34 over supplying hydrogen from the first hydrogen tanks 40 to the hydrogen power device 34, although this is merely an example. In this case, the controller 68 closes the control valves 41 for the plurality of first hydrogen tanks 40 and opens the control valves 43 for the plurality of second hydrogen tanks 42. Additionally, the controller 68 allows a simultaneous hydrogen supply from all the second hydrogen tanks 42 and also allows a sequential hydrogen supply from the second hydrogen tanks 42. As described above, the second hydrogen tanks 42 are arranged along the up-down direction. The controller 68 may prioritize supplying hydrogen from lower-positioned second hydrogen tanks 42 to the hydrogen power device 34 over supplying hydrogen from upper-positioned second hydrogen tanks 42 to the hydrogen power device 34. The controller 68 may be a single computer device or a combination of multiple computer devices.

The transport vehicle 10 according to this embodiment uses both the fixed-type first hydrogen tanks 40 and the cartridge-type second hydrogen tanks 42 as hydrogen tanks. The second hydrogen tanks 42 can be replaced with already-refilled hydrogen tanks when the hydrogen remaining amount therein becomes small. This allows for a reduction in hydrogen refill time for the transport vehicle 10 compared to directly refilling the second hydrogen tanks 42 with hydrogen. Even when the hydrogen remaining amounts in the first hydrogen tanks 40 and the second hydrogen tanks 42 both become small, necessary refill may be accomplished simply by a replacement of the second hydrogen tanks 42 with already-refilled hydrogen tanks if an expected transport distance is relatively short, allowing for a cutdown in the hydrogen refill work for the transport vehicle 10.

The tank unit 60 is configured to be attached to the second vehicle body 24 of the trailer 14 by being inserted in the width direction of the transport vehicle 10 into the opening 72 which is open in the width direction of the transport vehicle 10. This facilitates replacement of the tank unit 60 because the cabin 22 and the cargo chamber structure 32 are less likely to get in the way during the replacement of the tank unit 60. Additionally, since the tank unit 60 and the second hydrogen tanks 42 are positioned between the cabin 22 and the cargo bed 30, changes in the weight balance of the transport vehicle 10 depending on whether the tank unit 60 and/or the second hydrogen tanks 42 are mounted or not can be suppressed.

In the transport vehicle 10 according to this embodiment, the plurality of second hydrogen tanks 42 is disposed in the trailer 14. The trailer 14 can be replaced with another trailer 14, for example, at a transportation hub such as a transshipment facility. That is, another trailer 14 can be coupled to the tractor 12. If second hydrogen tanks 42 are disposed in this trailer 14, the second hydrogen tanks 42 can be refilled with hydrogen before the trailer 14 is coupled to the tractor 12. That is, the replacement of the trailer 14 with another one achieves both exchange of cargos and hydrogen refill for the transport vehicle 10 at once. The number of second hydrogen tanks 42 disposed in the trailer 14 is not particularly limited. The number may be any number as long as at least one second hydrogen tank 42 is disposed in the trailer 14. Further, the second hydrogen tanks 42 may not necessarily be hydrogen tanks of cartridge type and may be hydrogen tanks of fixed type fixable to the trailer 14.

The plurality of first hydrogen tanks 40 is disposed in the tractor 12. Thus, the tractor 12 can run by itself even when the trailer 14 is not coupled to the tractor 12. The number of first hydrogen tanks 40 in the tractor 12 is not particularly limited. The number may be any number as long as at least one first hydrogen tank 40 is disposed in the tractor 12. Thus, in the transport vehicle 10 comprising the tractor 12 and the trailer 14, at least one hydrogen tank 40 may be located in the tractor 12 and at least one second hydrogen tank 42 may be located in the trailer 14.

In this embodiment, the second hydrogen tanks 42 are positioned forward of the cargo compartment 31 defined by the cargo compartment structure 32. In this case, the second hydrogen tanks 42 are positioned relatively near the hydrogen power device 34 disposed in the first vehicle body 16 of the tractor 12. This allows for a reduction in the length of a hydrogen supply pathway (e.g., the hydrogen supply pathway 46) between the second hydrogen tanks 42 and the hydrogen power device 34.

Especially, in this embodiment, the entire tank unit 60 is positioned between the cabin 22 and the cargo bed 30 in the front-rear direction of the transport vehicle 10 and forward of the cargo compartment 31 defined by the cargo compartment structure 32. This allows the second connection port 54 of the tank unit 60 to be positioned relatively near the hydrogen power device 34 disposed in the first vehicle body 16 of the tractor 12, allowing for a further reduction in the length of the hydrogen supply pathway.

In the transport vehicle 10 according to this embodiment, as shown in FIG. 4, the plurality of second hydrogen tanks 42 includes second hydrogen tanks 42 that are detachably attachable to the trailer 14 individually. This allows the second hydrogen tanks 42 to be replaced individually and thus allows only the second hydrogen tank(s) 42 with small hydrogen remaining amount(s) to be replaced.

In the transport vehicle 10 according to this embodiment, each of the second hydrogen tanks 42 has a column shape. In this case, the axial direction of each column shape is along the right-left direction of the transport vehicle 10. This facilitates the positioning of the second hydrogen tanks 42 between the cabin 22 and the cargo bed 30 and also the replacement of the second hydrogen tanks 42.

As shown in FIG. 3, the transport vehicle 10 according to this embodiment comprises the tank unit 60 configured to be detachably attachable to the second vehicle body 24 of the trailer 14. As shown in FIG. 2, the plurality of second hydrogen tanks 42 is disposed in the tank unit 60. This allows the tank unit 60 to be replaced as a single unit, simplifying the replacement work. Further, since the plurality of second hydrogen tanks 42 can be attached to and detached from the second vehicle body 24 at once, simplifying the replacement work.

As shown in FIG. 3, in the transport vehicle 10 according to this embodiment, the tank unit 60 comprises the second manifold 56 connected to each of the plurality of second hydrogen tanks 42, the second connection port 54 connected to the second manifold 56 and configured to be detachably attachable to the hydrogen supply pathway 46 disposed in the first vehicle body 16 of the tractor 12, and the second hydrogen refill port 58 connected to the second manifold 56 and configured to be detachably attachable to the external hydrogen refill device 62. This allows for a reduction in the length of the hydrogen supply pathway disposed in the tractor 12 by positioning the second connection port of the tank unit 60 near the hydrogen power device 34. The second connection port 54 herein is an example of hydrogen supply port in the claimed invention.

The first connection port 50 is not necessarily disposed in the first vehicle body 16 of the tractor 12. For example, the first connection port 50 may be disposed in the second vehicle body 24 of the trailer 14. In this case, a second hydrogen supply pathway may be further provided between the hydrogen supply pathway 46 in the first vehicle body 16 of the tractor 12 and the first connection port 50 in the second vehicle body 24 of the trailer 14. In other words, the second connection port 54 may be configured to be detachably attachable to the first connection port 50 disposed in the second vehicle body 24 of the trailer 14.

The transport vehicle 10 according to this embodiment comprises the controller 68 configured to control a hydrogen supply from the hydrogen tanks 40, 42 to the hydrogen power device 34. The controller 68 prioritizes supplying hydrogen from the second hydrogen tanks 42 to the hydrogen power device 34 over supplying hydrogen from the first hydrogen tanks 40 to the hydrogen power device 34. This allows for a reduction in a hydrogen refill time for the first hydrogen tanks 40 because the hydrogen in the second hydrogen tanks 42 is consumed prior to the hydrogen in the first hydrogen tanks 40. Alternatively, when a large amount of hydrogen remains in the first hydrogen tanks 40, hydrogen refill for the first hydrogen tanks 40 can be omitted and only second hydrogen tank(s) 42 can be replaced to complete the hydrogen refill for the transport vehicle 10.

As shown in FIG. 1, the transport vehicle 10 further comprises a pair of side members 70. The pair of side members 70 is disposed in the second vehicle body 24 of the trailer 14. The side members 70 extend along the front-rear direction of the transport vehicle 10 and are spaced apart from each other in the width direction of the transport vehicle 10. The plurality of second hydrogen tanks 42 is positioned above the pair of side members 70. This reduces a collision load applied to the second hydrogen tanks 42, for example, when the transport vehicle 10 collides.

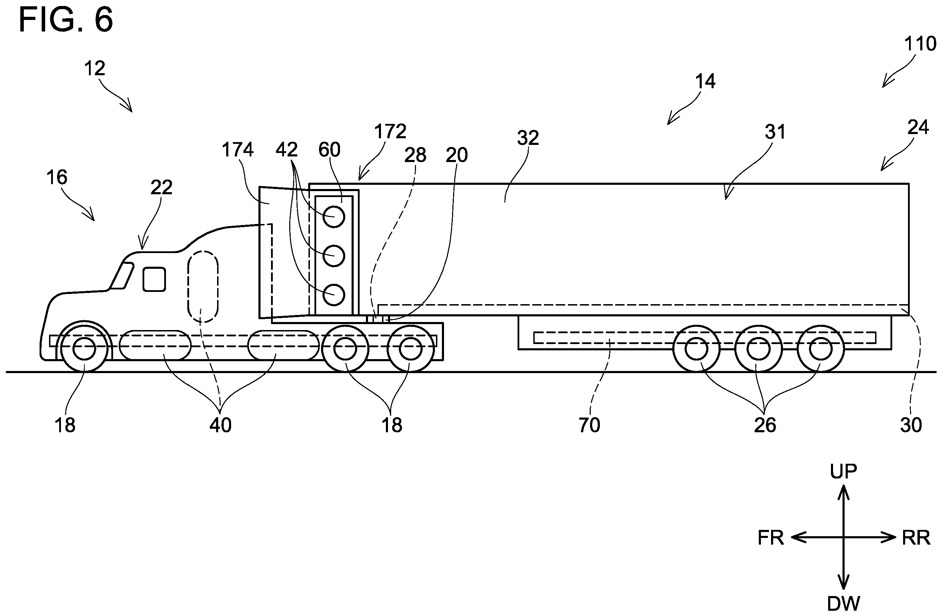

(Second Embodiment) Referring to FIG. 6, a transport vehicle 110 according to a second embodiment is described. As shown in FIG. 6, the transport vehicle 110 according to the second embodiment is different from the transport vehicle 10 according to the first embodiment in the position of the tank unit 60. Except for this, the transport vehicle 110 is the same as the transport vehicle 10 according to the first embodiment, and thus similar descriptions are not repeated herein.

In the transport vehicle 110 according to the second embodiment, the tank unit 60 is positioned inside the cargo compartment 31 defined by the cargo compartment structure 32. The tank unit 60 is located in a frontmost portion of the cargo compartment 31 and forward of the cargo bed 30 on which a cargo is placed. In the second embodiment, the cargo compartment structure 32 comprises an opening 172 formed in its wall surface in the width direction (direction LH) of the transport vehicle 110 and a door 174 to open and close the opening 172. The opening 172 is located between the cabin 22 and the cargo bed 30 and is open in the width direction (direction LH) of the transport vehicle 110. Thus, the tank unit 60 including the plurality of second hydrogen tanks 42 is attached to the second vehicle body 24 of the trailer 14 by being inserted into the opening 172 in the width direction (direction LH). The tank unit 60 attached in the second vehicle body 24 can be taken out in the width direction (direction LH) through the opening 172, thereby replacing the plurality of second hydrogen tanks 42.

The transport vehicle 110 according to this embodiment also uses both the fixed-type first hydrogen tanks 40 and the cartridge-type second hydrogen tanks 42 as hydrogen tanks. This allows for a reduction in a hydrogen refill time for the transport vehicle 110 and/or a cutdown in hydrogen refill to the transport vehicle 110. Further, the tank unit 60 is configured to be attached to the second vehicle body 24 of the trailer 14 by being inserted in the width direction of the transport vehicle 110 into the opening 172 which is open in the width direction of the transport vehicle 110. This facilitates replacement of the tank unit 60 because the cabin 22 and the cargo compartment structure 32 are less likely to get in the way during the replacement of the tank unit 60. Additionally, the tank unit 60 and the second hydrogen tanks 42 are positioned between the cabin 22 and the cargo bed 30. This suppresses changes in the weight balance of the transport vehicle 110 depending on whether the tank unit 60 and/or the second hydrogen tanks 42 are mounted or not. Further, the hydrogen tanks 40, 42 are distributed in the tractor 12 and the trailer 14. The second hydrogen tanks 42 are disposed in the trailer 14. Thus, replacing the trailer 14 with another one achieves both exchange of cargos and hydrogen refill for the transport vehicle 110 at once. The first hydrogen tanks 40 are disposed in the tractor 12. Thus, the tractor 12 can run by itself even when the trailer 14 is not coupled to the tractor 12.

In this embodiment, the second hydrogen tanks 42 are positioned in the frontmost portion of the cargo compartment 31. In this case, the second hydrogen tanks 42 are positioned relatively near the hydrogen power device 34 disposed in the first vehicle body 16 of the tractor 12. This allows for a reduction in the length of a hydrogen supply pathway (e.g., the hydrogen supply pathway 46) between the second hydrogen tanks 42 and the hydrogen power device 34.

Especially, in this embodiment, the entire tank unit 60 is positioned in the frontmost portion of the cargo compartment 31. This allows for a further reduction in the length of the hydrogen supply pathway because the second connection port 54 of the tank unit 60 is positioned relatively near the hydrogen power device 34 disposed in the first vehicle body 16 of the tractor 12.

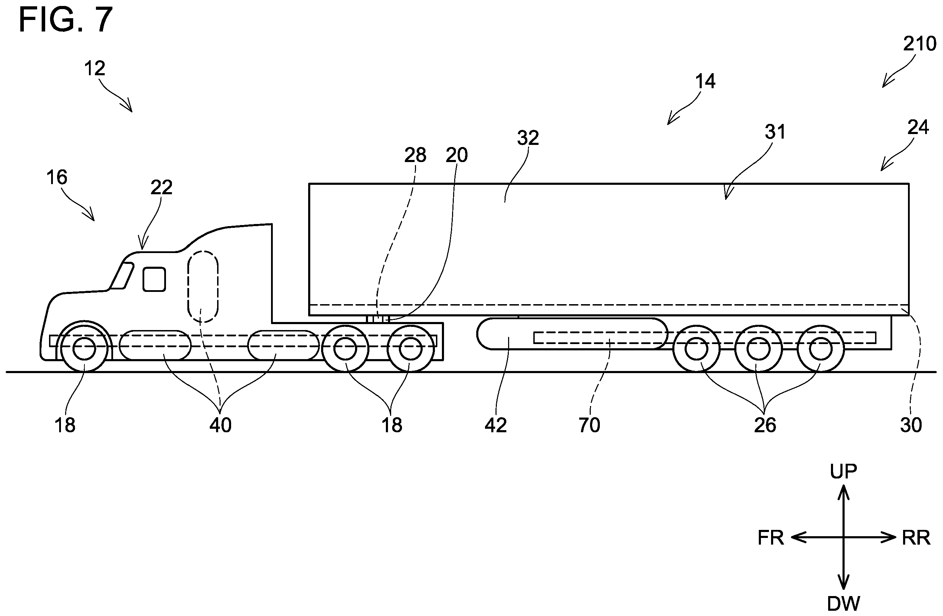

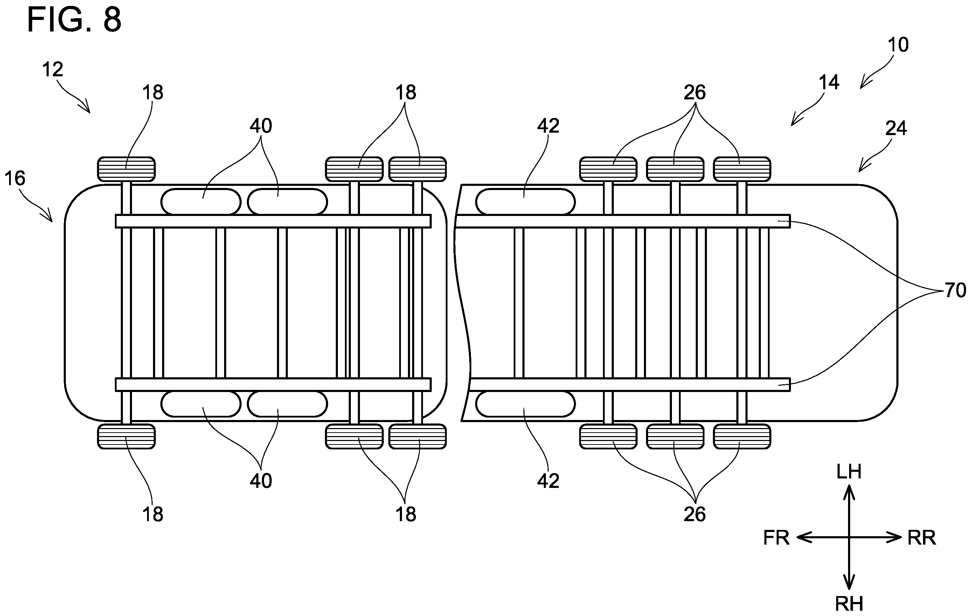

(Third Embodiment) Referring to FIGS. 7 and 8, a transport vehicle 210 according to a third embodiment is described. As shown in FIGS. 7 and 8, the transport vehicle 210 according to the third embodiment is different from the transport vehicle 10 according to the first embodiment in how the second hydrogen tanks 42 are mounted. Except for this, the transport vehicle 210 is the same as the transport vehicle 10 according to the first embodiment, and thus similar descriptions are not repeated herein.

In the transport vehicle 210 according to this embodiment, the plurality of second hydrogen tanks 42 is positioned below the cargo bed 30 in the trailer 14. The second hydrogen tanks 42 are configured to be detachably attachable to the second vehicle body 24 of the trailer 14 individually. The second hydrogen tanks 42 may be attached to the pair of side members 70 in the second vehicle body 24, although this is merely an example. The axial direction of the column shape of each second hydrogen tank 42 is along the front-rear direction of the transport vehicle 210.

In the transport vehicle 210 according to this embodiment as well, the plurality of second hydrogen tanks 42 can be detached from the transport vehicle 210. Further, the plurality of second hydrogen tanks 42 can be refilled with hydrogen in the state of being detached from the transport vehicle 210.

The transport vehicle 210 according to this embodiment also uses the fixed-type first hydrogen tanks 40 and the cartridge-type second hydrogen tanks 42 as hydrogen tanks. This allows for a reduction in a hydrogen refill time for the transport vehicle 210 and/or a cutdown in hydrogen refill for the transport vehicle 210. Further, the hydrogen tanks 40, 42 are distributed in the tractor 12 and the trailer 14. Thus, replacing the trailer 14 with another one achieves both exchange of cargos and hydrogen refill for the transport vehicle 210 at once. Additionally, the first hydrogen tanks 40 are disposed in the tractor 12. Thus, the tactor 12 can run by itself even when the trailer 14 is not coupled to the tractor 12.

As shown in FIG. 7, in this embodiment, the second hydrogen tanks 42 are detachably attachable to the pair of side members 70. As described above, the pair of side members 70 is located below the cargo bed 30. This ensures a wide space where a cargo to be transported is placed (i.e., the cargo compartment 31) above the pair of side members 70 in the trailer 14. At least one second hydrogen tank 42 may be detachably attachable to at least one of the side members 70. As long as at least one second hydrogen tank 42 is detachably attachable to at least one of the side members 70, the positions of the other elements of the tank unit 60 may be varied.

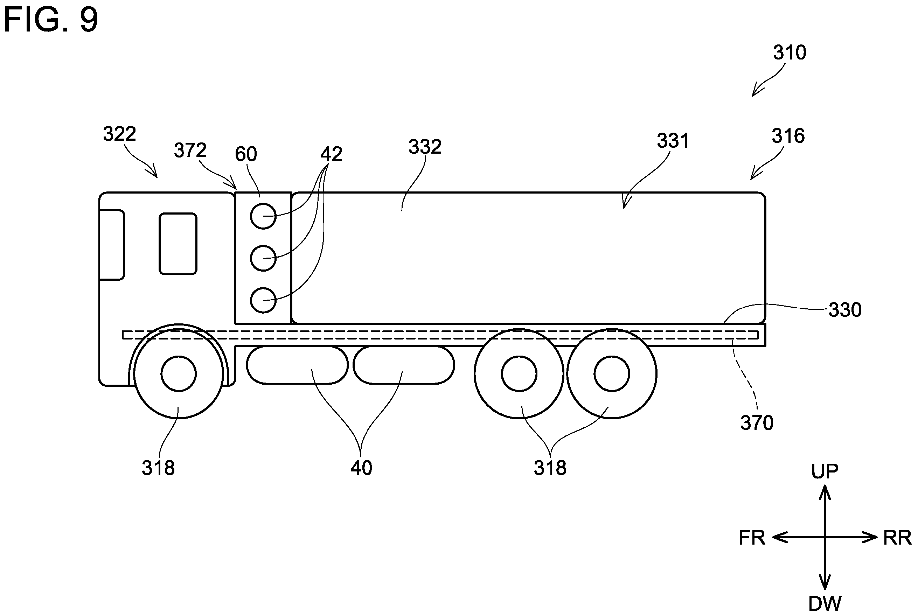

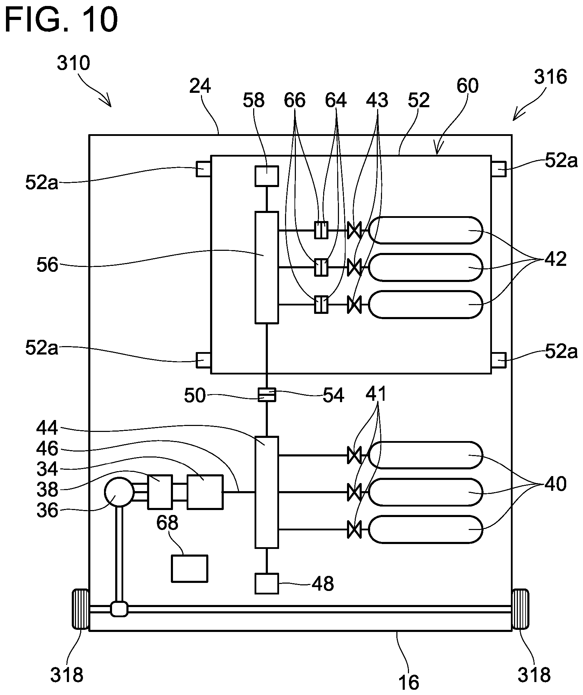

(Fourth Embodiment) Referring to FIGS. 9 and 10, a transport vehicle 310 according to a fourth embodiment is described. As shown in FIGS. 9 and 10, the transport vehicle 310 according to the fourth embodiment comprises a vehicle body 316 and a plurality of wheels 318. The plurality of wheels 318 is rotatably attached to the vehicle body 316. The vehicle body 316 comprises a cabin 322, a cargo bed 330, and a cargo compartment structure 332. The cabin 322 is a space for a vehicle occupant. The cargo bed 330 is located rearward of the cabin 322. The cargo compartment structure 332 is located on the cargo bed 330 and defines a cargo chamber 331 above the cargo bed 330. The cargo bed 330 is a portion on which a cargo to be transported is actually placed. Thus, a cargo is housed in the cargo compartment 331. The vehicle body 316 is constituted of a metal such as a steel material or an aluminum alloy, although this is merely an example.

Compared with the transport vehicle 10 according to the first embodiment, the transport vehicle 310 according to the fourth embodiment comprises a single vehicle body 316 without the distinction between the tractor 12 and the trailer 14, and the cabin 322, the cargo bed 330, and the cargo compartment structure 332 all are disposed in the single vehicle body 316. An opening 372 is formed between the cabin 322 and the cargo bed 330 in the front-rear direction of the transport vehicle 310. The opening 372 is open in the width direction (the directions LH and RH) of the transport vehicle 310. Except for the above, the transport vehicle 310 is the same as the transport vehicle 10 according to the first embodiment. Hereinafter, the same configurations as those of the first embodiment are labeled with the same reference signs and their descriptions are not repeated herein. However, as shown in FIG. 10, in the transport vehicle 310 according to the fourth embodiment, components such as the hydrogen power device 34, the motor 36, the inverter 38, the plurality of first hydrogen tanks 40 (including the control valves 41), the plurality of second hydrogen tanks 42 (including the control valves 43 and a pair of couplers 64, 66), the first manifold 44, the hydrogen supply pathway 46, the first hydrogen refill port 48, the first connection pot 50, the unit frame 52 (including the plurality of locks 52a), the second connection port 54, the second manifold 56, the second hydrogen refill port 58, the tank unit 60, and the controller 68 are all disposed in the single vehicle body 316.

The transport vehicle 310 according to this embodiment also uses both the fixed-type first hydrogen tanks 40 and the cartridge-type second hydrogen tanks 42 as hydrogen tanks. This allows for a reduction in a hydrogen refill time for the transport vehicle 310 and/or a cutdown in hydrogen refill for the transport vehicle 310.

As shown in FIG. 9, in this embodiment, the tank unit 60 is configured to be attached to the vehicle body 316 by being inserted in the width direction of the transport vehicle 310 into the opening 372 which is open in the width direction of the transport vehicle 310. This facilitates replacement of the tank unit 60 because the cabin 322 and the cargo compartment structure 332 are less likely to get in the way during the replacement of the tank unit 60.

As shown in FIG. 9, in this embodiment, the tank unit 60 and the second hydrogen tanks 42 are located between the cabin 322 and the cargo bed 330 in the front-rear direction of the transport vehicle 310. This suppresses changes in the weight balance of the transport vehicle 310 depending on whether the tank unit 60 and/or the second hydrogen tanks 42 are mounted or not.

As shown in FIG. 9, in this embodiment, the second hydrogen tanks 42 are located forward of the cargo compartment 331 defined by the cargo compartment structure 332 and are detachably attached in a front portion of the cargo compartment structure 332. In this case, the second hydrogen tanks 42 are positioned relatively near the hydrogen power device 34 disposed in the vehicle body 316. This allows for a reduction in the length of a hydrogen supply pathway (e.g., the hydrogen supply pathway 46) between the second hydrogen tanks 42 and the hydrogen power device 34.

Especially, in this embodiment, the entire tank unit 60 is positioned between the cabin 322 and the cargo bed 330 in the front-rear direction of the transport vehicle 310 and forward of the cargo compartment 331 defined by the cargo compartment structure 332. This allows for a further reduction in the length of the hydrogen supply pathway because the second connection port 54 of the tank unit 60 is positioned relatively near the hydrogen power device 34 disposed in the vehicle body 316.

In the transport vehicle 310 according to this embodiment, the second hydrogen tanks 42 are configured to be detachably attachable to the vehicle body 316 individually. This allows the second hydrogen tanks 42 to be replaced individually and thus allows only second hydrogen tank(s) 42 with small hydrogen remaining amount to be replaced. Additionally, the plurality of second hydrogen tanks 42 is disposed in the tank unit 60 and thus is detachably attachable to the vehicle body 316 at once. Since the plurality of second hydrogen tanks 42 can be replaced at once, the replacement of the second hydrogen tanks is facilitated. In the transport vehicle 310, as with the transport vehicle 10 according to the first embodiment, one or more second hydrogen tanks 42 can be detached from the vehicle body 316 individually.

As shown in FIG. 9, the transport vehicle 310 according to this embodiment comprises the controller 68 configured to control a hydrogen supply from the hydrogen tanks 40, 42 to the hydrogen power device 34. The controller 68 prioritizes supplying hydrogen from the second hydrogen tanks 42 to the hydrogen power device 34 over supplying hydrogen from the first hydrogen tanks 40 to the hydrogen power device 34. This allows for a reduction in the hydrogen refill time for the first hydrogen tanks 40 and/or a cutdown in hydrogen refill to the first hydrogen tanks 40.

As shown in FIG. 9, the transport vehicle 310 according to this embodiment further comprises a pair of side members 370. The pair of side members 370 is disposed in the vehicle body 316. The side members 370 extend in the front-rear direction of the transport vehicle 310 and are spaced apart from each other in the width direction of the transport vehicle 310. The plurality of second hydrogen tanks 42 is positioned above the pair of side members 370. This reduces a collision load applied to the second hydrogen tanks 42, for example, when the transport vehicle 310 collides.

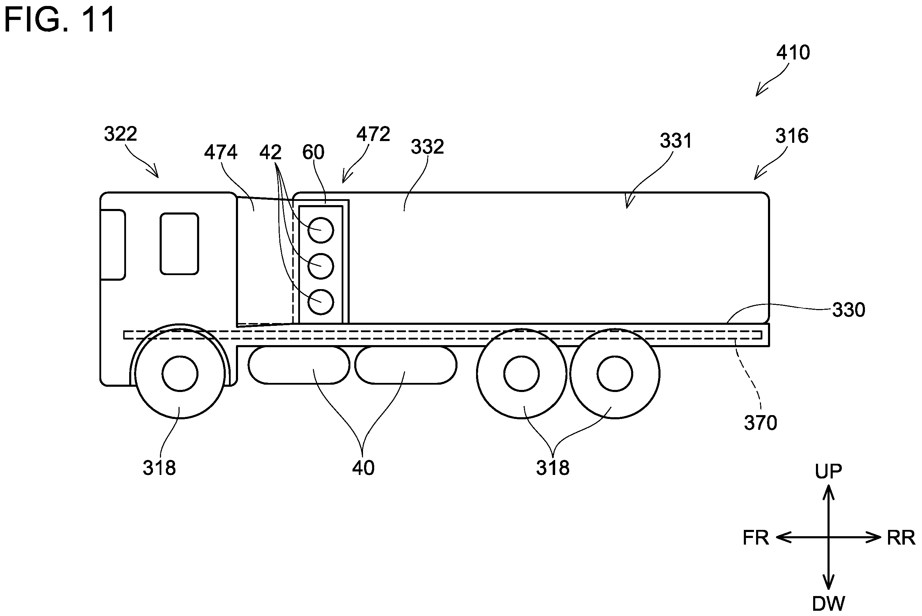

(Fifth Embodiment) Referring to FIG. 11, a transport vehicle 410 according to a fifth embodiment is described. As shown in FIG. 11, the transport vehicle 410 according to the fifth embodiment is different from the transport vehicle 310 according to the fourth embodiment in the position of the tank unit 60. Except for this, the transport vehicle 410 is the same as the transport vehicle 310 according to the fourth embodiment, and thus similar descriptions are not repeated herein.

In the transport vehicle 410 according to the fifth embodiment, the tank unit 60 is positioned inside the cargo chamber 331 defined by the cargo compartment structure 332. Specifically, the tank unit 60 is located in a forwardmost portion of the cargo compartment 331 and is forward of the cargo bed 330 on which a cargo is placed. In the fifth embodiment, the cargo compartment structure 332 comprises an opening 472 formed in a wall surface in the width direction (direction LH) of the transport vehicle 410 and a door 474 to open and close the opening 472. The opening 472 is located between the cabin 322 and the cargo bed 330 and is open in the width direction (direction LH) of the transport vehicle 410. Thus, the tank unit 60 including the plurality of second hydrogen tanks 42 is attached to the second vehicle body 24 of the trailer 14 by being inserted into the opening 472 in the width direction (direction LH). The tank unit 60 attached in the second vehicle body 24 can be taken out in the width direction (direction LH) through the opening 472, allowing for the replacement of the plurality of second hydrogen tanks 42.

The transport vehicle 410 according to this embodiment also uses both the fixed-type first hydrogen tanks 40 and the cartridge-type second hydrogen tanks 42 as hydrogen tanks. This allows for a reduction in hydrogen refill time for the transport vehicle 410 and/or a cutdown in hydrogen refill for the transport vehicle 410. Further, the tank unit 60 is configured to be attached to the second vehicle body 24 of the trailer 14 by being inserted in the width direction of the transport vehicle 410 into the opening 472 which is open in the width direction of the transport vehicle 410. The cabin 322 and the cargo compartment structure 332 are less likely to get in the way during the replacement of the tank unit 60, facilitating the replacement of the tank unit 60. Additionally, the tank unit 60 and the second hydrogen tanks 42 are positioned between the cabin 322 and the cargo bed 330. This suppresses changes in weight balance of the transport vehicle 410 depending on whether the tank unit 60 and/or the second hydrogen tanks 42 are mounted or not.

As shown in FIG. 11, in this embodiment, the second hydrogen tanks 42 are positioned in the forwardmost portion of the cargo compartment 331. Thus, the second hydrogen tanks 42 are positioned relatively near the hydrogen power device 34 disposed in the vehicle body 316. This configuration allows for a reduction in the length of a hydrogen supply pathway (e.g., the hydrogen supply pathway 46) between the second hydrogen tanks 42 and the hydrogen power device 34. It should be noted that as long as the second hydrogen tanks 42 are positioned inside the cargo chamber 31, the positions of the other elements of the tank unit 60 are not particularly limited.

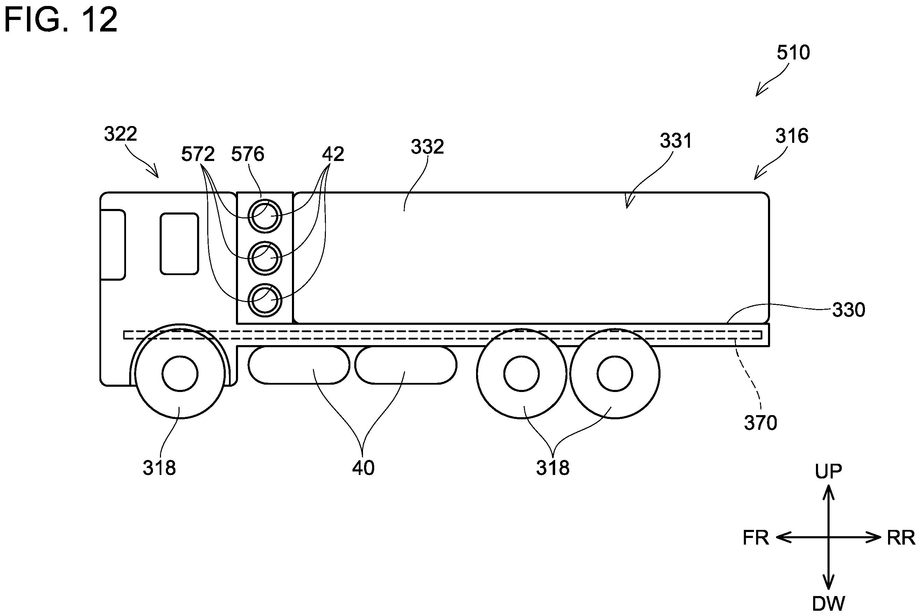

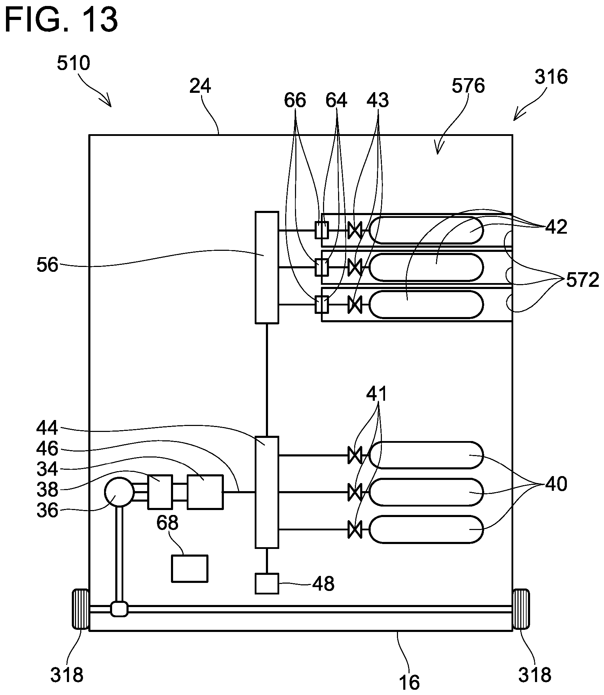

(Sixth Embodiment) Referring to FIGS. 12 and 13, a transport vehicle 510 according to a sixth embodiment is described. As shown in FIG. 12, the transport vehicle 510 according to the sixth embodiment is different from the transport vehicle 310 according to the fourth embodiment in how the second hydrogen tanks 42 are mounted. Specifically, in the transport vehicle 510 according to the sixth embodiment, the multiple second hydrogen tanks 42 are configured to be detachably attachable individually without the tank unit 60. Except for this, the transport vehicle 510 is the same as the transport vehicle 310 according to the fourth embodiment, and thus the same configurations are labeled with the same reference signs and their descriptions are not repeated herein.

As shown in FIG. 12, the transport vehicle 510 further comprises a tank interface 576. The tank interface 576 is located between the cabin 322 and the cargo bed 330 in the front-rear direction of the transport vehicle 510. The tank interface 576 comprises a plurality of openings 572. Each opening 572 is open in the width direction of the transport vehicle 510 (direction LH here). Each of the second hydrogen tanks 42 is insertable into corresponding one of the plurality of openings 572 in the width direction of the transport vehicle 510. The openings 572 are arranged along the up-down direction of the transport vehicle 510.

Each second hydrogen tank 42 is attachable to the vehicle body 316 by being inserted into corresponding one of the openings 572 of the tank interface 576 in the width direction of the transport vehicle 510. Each second hydrogen tank 42 attached in the vehicle body 316 can be taken out in the width direction through the opening 576 of the tank interface 576 to be detached from the vehicle body 316. As described above, the tank interface 576 is located between the cabin 322 and the cargo bed 330 in the front-rear direction of the transport vehicle 510, and thus the second hydrogen tanks 42 are also located between the cabin 322 and the cargo bed 330 in the front-rear direction of the transport vehicle 510.

As shown in FIG. 13, the tank interface 576 comprises the second manifold 56. The second manifold 56 is supported by the tank interface 576. The second manifold 56 is connected to the first manifold 44 such that hydrogen can flow therebetween. A pair of couplers 64, 66 is located between the second manifold 56 and each of the second hydrogen tanks 42. Each pair of couplers 64, 66 comprises a socket 64 connected to corresponding one of the second hydrogen tanks 42 and a plug 66 connected to the second manifold 56. The sockets 64 are detachably inserted in the plugs 66.

The transport vehicle 510 according to this embodiment also uses both the fixed-type first hydrogen tanks 40 and the cartridge-type second hydrogen tanks 42 as hydrogen tanks. This allows for a reduction in hydrogen refill time for the transport vehicle 510 and/or a cutdown in hydrogen refill for the transport vehicle 510. Further, the second hydrogen tanks 42 are configured to be attachable to the vehicle body 316 by being inserted in the width direction of the transport vehicle 510 into the openings 572 which are open in the width direction of the transport vehicle 510. Thus, the cabin 322 and the cargo compartment structure 332 are less likely to get in the way during the replacement of the second hydrogen tanks 42, facilitating the replacement of the second hydrogen tanks 42. Additionally, the second hydrogen tanks 42 are positioned between the cabin 322 and the cargo bed 330. This suppresses changes in the weight balance of the transport vehicle 510 depending on whether the second hydrogen tanks 42 are mounted or not.

The position of the tank interface 576 is not particularly limited. For example, the tank interface 576 may be positioned inside the cargo chamber 331. That is, the tank interface 576 may be positioned at the position where the tank unit 60 is attached in the transport vehicle 410 according to the fifth embodiment. In this case, similar to the fifth embodiment, the cargo compartment structure 332 may comprise an opening in its wall surface in the width direction and a door for the opening. In this configuration as well, the second hydrogen tanks 42 can be configured to be attachable to the vehicle body 316 by being inserted in the width direction of the transport vehicle 510 into the openings 572 which are open in the width direction of the transport vehicle 510. The configuration using the tank interface 576 can be also used in the transport vehicles comprising a tractor and a trailer as described in connection with the first to third embodiments.

In all the embodiments described above, the transport vehicle comprises the hydrogen power device 34, the plurality of hydrogen tanks 40, 42, and the control device 68. A power system is constituted by at least the hydrogen power device 34, the plurality of hydrogen tanks 40, 42, and the control device 68. The power system outputs power by consuming hydrogen. The power system is applicable not only to the exemplary transport vehicles described herein but also to transport vehicles including any configurations.

In one or more embodiments described above, the transport vehicle comprises the plurality of first hydrogen tanks 40 and the plurality of second hydrogen tanks 42. However, the number of the first hydrogen tanks 40 and the number of the second hydrogen tanks 42 are not particularly limited and may take any numbers as long as the numbers are equal to or greater than one.

The hydrogen power device 34 is not limited to a fuel cell stack and may be any mechanism as long as it can output power by consuming hydrogen. For example, in another embodiment, the hydrogen power device 34 may be a hydrogen engine.

The hydrogen tanks 40, 42 each are not limited to having a column shape. The shape of the hydrogen tanks 40, 42 may be varied depending on the space for the hydrogen tanks, the workability of the tank replacement, etc.

## Claims

1. A transport vehicle (10, 110, 210) comprising:
a tractor (12);
a trailer (14) towed by the tractor (12);
a hydrogen power device (34) configured to output power by consuming hydrogen; and
a plurality of hydrogen tanks (40, 42) for supplying hydrogen to the hydrogen power device (34),
wherein the plurality of hydrogen tanks (40, 42) includes at least one first hydrogen tank (40) of fixed type that is fixable to the tractor (12) and at least one second hydrogen tank (42) of cartridge type that is detachably attachable to the trailer (14).

2. The transport vehicle (10, 110, 210) according to claim 1, wherein the at least one first hydrogen tank (40) is configured to be refilled with hydrogen in a state of being fixed to the tractor (12) and the at least one second hydrogen tank (42) is configured to be refilled with hydrogen in a state of being detached from the trailer (14).

3. The transport vehicle (10) according to claim 1 or 2, wherein the trailer (14) comprises a cargo compartment structure (32) and wherein the at least one second hydrogen tank (42) is located forward of a cargo compartment (31) defined by the cargo compartment structure (32).

4. The transport vehicle (110) according to claim 1 or 2, wherein the trailer (14) comprises a cargo compartment structure (32) and wherein the at least one second hydrogen tank (42) is located inside a cargo compartment (31) defined by the cargo compartment structure (32).

5. The transport vehicle (10, 110, 210) according to any one of claims 1 to 4, wherein the at least one second hydrogen tank (42) comprises a plurality of second hydrogen tanks (42) detachably attachable to the trailer (14) individually.

6. The transport vehicle (10, 110, 210) according to any one of claims 1 to 5, further comprising a tank unit (60) detachably attachable to the trailer (14), wherein the at least one second hydrogen tank (42) comprises a plurality of second hydrogen tanks (42) placed within the tank unit (60).

7. The transport vehicle (10, 110, 210) according to claim 6, wherein the tank unit (60) comprises:
a manifold (56) connected to each of the plurality of second hydrogen tanks (42);
a hydrogen supply port (54) connected to the manifold (56) and configured to be detachably attached to a hydrogen supply pathway (46) disposed in the tractor (12) or the trailer (14); and
a hydrogen refill port (58) connected to the manifold (56) and configured to be detachably attached to an external hydrogen refill device (62).

8. The transport vehicle (10, 110, 210) according to any one of claims 1 to 7, further comprising a controller (68) configured to control a hydrogen supply from the plurality of hydrogen tanks (40, 42) to the hydrogen power device (34),
wherein the controller (68) prioritizes supplying hydrogen from the at least one second hydrogen tank (42) to the hydrogen power device (34) over supplying hydrogen from the at least one first hydrogen tank (40) to the hydrogen power device (34).

9. The transport vehicle (210) according to any one of claims 1 to 8, wherein the trailer (14) comprises a pair of side members (70) extending along a front-rear direction of the transport vehicle (10) and wherein the at least one second hydrogen tank (42) is detachably attachable to at least one of the pair of side members (70).

10. The transport vehicle (210) according to claim 9, wherein the at least one second hydrogen tank (42) comprises a plurality of second hydrogen tanks (42) detachably attachable to at least one of the pair of side members (70) individually.

11. A power system for a transport vehicle (10, 110, 210, 310, 410, 510), comprising:
a hydrogen power device (34) configured to output power by consuming hydrogen;
a plurality of hydrogen tanks (40, 42) connected to the hydrogen power device (34); and
a controller (68) configured to control a hydrogen supply from the plurality of hydrogen tanks (40, 42) to the hydrogen power device (34);
wherein
the plurality of hydrogen tanks (40, 42) includes at least one first hydrogen tank (40) of fixed type that is fixable to a vehicle body (16, 24, 316) of the transport vehicle (10, 110, 210, 310, 410, 510) and at least one second hydrogen tank (40) of cartridge type that is detachably attachable to the vehicle body (16, 24, 316), and
the controller (68) prioritizes supplying hydrogen from the at least one second hydrogen tank (42) to the hydrogen power device (34) over supplying hydrogen from the at least one first hydrogen tank (40) to the hydrogen power device (34).

12. The power system according to claim 11, wherein the at least one second hydrogen tank (42) comprises a plurality of second hydrogen tanks (42) detachably attachable to the vehicle body (16, 24, 316) individually.

13. The power system according to claim 12, wherein each of the plurality of second hydrogen tanks (42) has a column shape and wherein an axial direction of the column shape is along a left-right direction or a front-rear direction of the transport vehicle (10, 110, 210, 310, 410, 510).

14. The power system according to claim 12 or 13, wherein the second hydrogen tanks (42) are arranged along an up-down direction and wherein the controller (68) prioritizes supplying hydrogen from a lower-positioned second hydrogen tank to the hydrogen power device over supplying hydrogen from an upper-positioned second hydrogen tank to the hydrogen power device (34).

15. A transport vehicle (310, 410, 510), comprising:
a vehicle body (316);
a hydrogen power device (34) disposed in the vehicle body (316) and configured to output power by consuming hydrogen; and
a plurality of hydrogen tanks (40, 42) disposed in the vehicle body (316), wherein the plurality of hydrogen tanks (40, 42) is for supplying hydrogen to the hydrogen power device (34),
wherein
the vehicle body (316) comprises a cabin (322) and a cargo bed (330) located rearward of the cabin (322),
the plurality of hydrogen tanks (40, 42) includes at least one first hydrogen tank (40) of fixed type that is fixable to the vehicle body (316) and at least one second hydrogen tank (42) of cartridge type that is detachably attachable to the vehicle body (316),
at least one opening (372, 472, 572) is formed between the cabin (322) and the cargo bed (330), wherein the opening (372, 472, 572) is open in a width direction of the transport vehicle (310, 410, 510), and
the at least one second hydrogen tank (42) is configured to be attached to the vehicle body (316) by being inserted to the at least one opening (372, 472, 572) in the width direction.
